(19) **Europäisches Patentamt / European Patent Office / Office européen des brevets**

(11) **EP 2 784 616 B1**

(12) **FASCICULE DE BREVET EUROPEEN**

(45) Date de publication et mention
de la délivrance du brevet:
**24.07.2019 Bulletin 2019/30**

(51) Int Cl.:
***G05B 23/02*** *(2006.01)*

(21) Numéro de dépôt: **14000851.7**

(22) Date de dépôt: **11.03.2014**

(54) **Procédé de détection et de prise en compte d'un changement abrupt d'au moins un indicateur de surveillance d'un dispositif**

Verfahren zur Erkennung und Berücksichtigung einer abrupten Veränderung mindestens eines Überwachungsindikators einer Vorrichtung

Method for detecting and acknowledging an abrupt change in at least one supervision indicator of a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2013 FR 1300698**

(43) Date de publication de la demande:
**01.10.2014 Bulletin 2014/40**

(73) Titulaire: **Airbus Helicopters**
**13725 Marignane Cedex (FR)**

(72) Inventeurs:
• **Morel, Hervé**
 **13113 Lamanon (FR)**
• **Mouterde, Joël**
 **13001 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A1- 2005 096 873   US-A1- 2009 281 735**
**US-A1- 2011 173 496**

**Description**

La présente invention concerne le domaine des systèmes de surveillance du fonctionnement d'un dispositif. La présente invention concerne notamment un procédé de prise en compte d'un changement abrupt d'au moins un indicateur de surveillance d'un dispositif ainsi qu'un moyen de mise en oeuvre de ce procédé.

La présente invention est plus particulièrement destinée à la surveillance du fonctionnement d'un aéronef à voilure tournante et de différents dispositifs qu'il comporte. Par exemple, le procédé selon l'invention s'applique au diagnostic d'un mécanisme de transmission de puissance inséré entre au moins un moteur thermique et au moins un rotor de cet aéronef.

La surveillance et la détection de l'apparition d'un défaut au sein d'un dispositif a fait l'objet de nombreuses recherches

Notamment, les systèmes de surveillance désignés par l'acronyme *HUMS* pour « Health and Usage Monitoring System » en langue anglaise ont pour but de surveiller un ou plusieurs dispositifs généralement dynamiques par l'intermédiaire de différents capteurs en suivant l'évolution d'un ensemble d'indicateurs de surveillance. Ces indicateurs sont calculés à partir des mesures d'un ou plusieurs capteur(s) afin de caractériser l'état et le fonctionnement de chaque dispositif. Par exemple, un indicateur peut être défini par un signal combinant les signaux de plusieurs capteurs. Plusieurs indicateurs peuvent également concerner les mesures d'un seul et même capteur à travers diverses caractéristiques du signal fourni par ce capteur, tel son spectre fréquentiel. Par exemple, un indicateur est constitué par l'amplitude maximum d'un signal temporel fourni par un accéléromètre.

L'évolution de chaque indicateur est comparée respectivement à un seuil de détection de défauts correspondant à cet indicateur afin de détecter un éventuel défaut ou une panne du dispositif surveillé. La valeur de chaque seuil de détection de défauts peut être obtenue par l'expérience, par une analyse statistique sur l'historique de la flotte en exploitation pour un type d'aéronefs et un système *HUMS* donné ou bien par un apprentissage individuel sur un aéronef donné.

Le document EP 0407179 et le document « Helicopter HUM/FDR benefits and developments », Brian D. Larder, American Helicopter Society 55th Annual Forum, Montréal, Quebec, 1999*,* donnent des informations concernant la surveillance de l'état d'un hélicoptère.

Le document « Vibration monitoring techniques investigated for the monitoring of a ch-47d swashplate bearing », Paul Grabill et al., American Helicopter Society 59th Annual Forum, Phoenix, AZ, 2003*,* décrit des techniques utilisées pour détecter des défauts de roulements à partir de données vibratoires.

Le document « Helicopter transmission diagnostics using constrained adaptive lifting », Paul Samuel et al., American Helicopter Society 59th Annual Forum, Phoenix, AZ, 2003*,* décrit l'utilisation d'un algorithme de diagnostic d'un mécanisme de transmission d'hélicoptère à l'aide d'ondelettes. Les ondelettes sont utilisées pour adapter l'algorithme pour un mécanisme défini. Elles sont déterminées à partir de données vibratoires d'une transmission en bon état et permettent de construire un modèle prédictif de la forme d'onde des signaux vibratoires. L'algorithme détermine une erreur de prédiction lors du fonctionnement de la transmission, dont l'amplitude donne une indication de l'existence de certains types de défauts d'un engrenage.

En outre, on connaît le document US2009/0281735 qui décrit un procédé de détermination d'une date future d'une opération de maintenance sur un composant ou bien un sous-système. Au cours de ce procédé, un indicateur d'état est déterminé à un instant donné ainsi qu'un taux de variation de cet indicateur d'état sur une période de temps. Un seuil de cet indicateur d'état peut être utilisé afin de déterminer si le composant ou bien le sous-système surveillé a subi un dommage. Ensuite, une valeur matérielle est déterminée à partir du taux de variation de cet indicateur d'état et une date future est déterminée à partir de l'indicateur d'état et de cette valeur matérielle. Enfin, cette date future est comparée à un seuil de date afin de déterminer si une opération de maintenance est nécessaire.

De plus, le document US2011/0173496 décrit une méthode de diagnostic au cours de laquelle on acquiert des données historiques de variables sélectionnées d'un ou plusieurs composants. Ensuite, on calcule des caractéristiques à partir de ces données historiques, puis on détermine des hypothèses de fonctionnement de ces composants. Enfin, on définit un état des composants pour chaque hypothèse et on en déduit d'éventuelles opérations de maintenance préventive.

On connaît également le document US2005/0096873 qui décrit une méthode de diagnostic d'un système mécanique. Cette méthode reçoit des informations vibratoires provenant de divers capteurs, puis traite ces informations vibratoires afin de fournir au moins un signal sur une large bande de fréquences et au moins un signal sur un autre domaine de fréquences. Ces signaux sont ensuite comparés avec des signaux comportant des défauts connus afin de déterminer des indicateurs d'état du système mécanique.

Les documents FR2900745 et FR2900746 décrivent un diagnostic d'un mécanisme de transmission de puissance d'un hélicoptère, notamment par analyse des variations d'indicateurs. Par exemple, la détection d'un saut, c'est-à-dire une forte et soudaine variation, de cet indicateur entre dans une des étapes constituant ce diagnostic afin de déterminer une anomalie au sein du mécanisme surveillé.

De tels systèmes de surveillance rendent ainsi possible la maîtrise des modes de dégradation des ensembles mécaniques en surveillant leur état de santé en temps réel afin d'anticiper et de détecter d'éventuels défauts ou pannes. La mise en place d'un tel système de surveillance permet de maîtriser les risques de pannes techniques en vol, de différer les tâches de maintenance, de diminuer les coûts de maintenance et d'augmenter la disponibilité du matériel pour le client.

Cependant, dans le cas d'un changement d'état brutal d'un des dispositifs de l'aéronef, les risques de non détection de défauts ainsi que de déclenchement de fausses alarmes sont importants, ce qui a un effet négatif respectivement sur le niveau de sécurité du vol de l'aéronef ainsi que sur la charge et le coût de maintenance de l'aéronef.

De même, si les seuils de détection de défauts utilisés par les systèmes de surveillance *HUMS* et obtenus par exemple par apprentissage ne sont pas mis à jour suite à une opération de maintenance, les risques de non détection d'un défaut ou de déclenchement de fausses alarmes sont également importants.

La présente invention a alors pour objet de proposer un procédé et un moyen de mise en oeuvre de ce procédé permettant de s'affranchir des limitations mentionnées ci-dessus. La présente invention est destinée à la surveillance du fonctionnement de dispositifs et plus particulièrement la surveillance du fonctionnement de dispositifs d'un aéronef à voilure tournante.

Ce procédé et ce moyen de mise en oeuvre portent sur la détection et l'analyse d'un changement abrupt dans l'historique d'un ou de plusieurs indicateurs calculés par un système de surveillance d'un dispositif. On entend par « changement abrupt » une variation soudaine d'un ou de plusieurs indicateur(s) d'un système de surveillance du dispositif. On peut également parler de « saut » de cet indicateur. Ce changement abrupt ou ce saut est également désigné par l'expression en langue anglaise « Step-Change » (SC).

Ce changement abrupt d'un indicateur est généralement significatif d'un changement d'état brutal du dispositif surveillé qui peut être un système mécanique, hydraulique ou électrique par exemple, et donc d'un défaut, d'une dégradation ou bien d'une panne de ce dispositif. Cependant, ce changement abrupt d'un indicateur peut également ne pas être lié à une telle dégradation, mais être consécutif à la réalisation d'une action de maintenance sur le dispositif. Ce changement abrupt peut alors être générateur d'une ou de fausse(s) alarme(s) par le système de surveillance du dispositif, mais également de la non détection d'un défaut, d'une dégradation ou bien d'une panne de ce dispositif. Ces fausses alarmes ont notamment pour conséquence de provoquer des arrêts de ce dispositif non nécessaires et, par suite, des opérations de maintenance également non nécessaires, le dispositif n'ayant en fait subi aucune dégradation.

Par exemple, le taux d'alarmes observées sur les aéronefs à voilure tournante contient plus de 50% de fausses alarmes faisant généralement suite à une opération de maintenance.

Selon l'invention, un tel procédé de détection et de prise en compte d'un changement abrupt d'au moins un indicateur de surveillance d'un dispositif comporte les étapes suivantes :

- on répartit les indicateurs de surveillance du dispositif dans au moins un groupe d'indicateurs,
- on détermine un seuil de changement abrupt pour chaque groupe d'indicateurs,
- on calcule, après une phase de fonctionnement du dispositif, un signal d'au moins un indicateur de surveillance du dispositif à partir des mesures d'au moins un capteur du dispositif,
- on ajoute chaque signal des indicateurs de surveillance à l'historique de ces indicateurs,
- on recherche pour chaque groupe d'indicateurs au moins un changement abrupt éventuel et une date de ce changement abrupt éventuel,
- on compare chaque changement abrupt éventuel avec le seuil de changement abrupt du groupe d'indicateurs, le changement abrupt étant avéré lorsque son amplitude est supérieure au seuil de changement abrupt,
- on détermine qu'un événement brutal est déclaré selon une règle logique à partir d'au moins un changement abrupt avéré d'au moins un groupe d'indicateurs,
- on associe à cet événement brutal une date de l'évènement brutal qui est la date la plus récente des changements abrupts avérés ayant permis de déterminer cet événement brutal, et
- on agit alors en fonction de la date de l'évènement brutal.

Ces indicateurs de surveillance permettent de surveiller un ou plusieurs dispositifs par l'intermédiaire de différents capteurs positionnés sur ce dispositif ou bien à proximité et notamment des mesures de ces capteurs. Ces indicateurs sont répartis dans différents groupes d'indicateurs formés suivant différents critères, tels qu'un dispositif à surveiller ou bien la localisation de plusieurs dispositifs à surveiller. Ce dispositif peut par exemple être contenu par un aéronef à voilure tournante.

L'ensemble des indicateurs de surveillance du dispositif est généralement stocké dans une première mémoire d'un moyen de centralisation, afin de former un historique de ces indicateurs de surveillance. Par exemple, après chaque phase de fonctionnement de l'aéronef contenant ce dispositif, et plus particulièrement chaque vol, les indicateurs sont calculés à partir des mesures des capteurs acquises au cours de cette phase de fonctionnement, puis ajoutés à l'historique de ces indicateurs de surveillance.

A partir de cet historique, un seuil de changement abrupt peut être déterminé pour chaque groupe d'indicateurs. Ce seuil de changement abrupt est une limite pour l'amplitude de chaque changement abrupt éventuel de ce groupe d'indicateurs. Ainsi le dépassement de ce seuil de changement abrupt par l'amplitude d'un changement abrupt éventuel signifie qu'un changement d'état brutal potentiel d'un élément de ce dispositif a été détecté et peut correspondre à une dégradation de ce dispositif. Ce seuil de changement abrupt peut notamment être défini à partir de cet historique et des différents changements d'état survenus sur le dispositif et identifiés dans cet historique. Ce seuil de changement abrupt est déterminé afin d'optimiser le taux détection de défauts et de minimiser le taux de fausses alarmes. Par exemple, dans le cas d'un aéronef, ce seuil de changement abrupt peut être déterminé par une analyse statistique sur l'historique d'un seul aéronef ou bien sur l'historique d'une flotte en exploitation pour un type d'aéronef.

Ce seuil de changement abrupt peut également être obtenu par l'expérience ou bien par un apprentissage individuel sur le dispositif. Par exemple, ce seuil de changement abrupt est le dernier changement abrupt détecté par le procédé.

De plus, ce seuil de changement abrupt peut également dépendre de la quantité de valeurs des indicateurs utilisées pour rechercher les changements abrupts éventuels ou bien de l'intervalle de temps sur lequel ont été déterminées ces valeurs.

Enfin, ce seuil de changement abrupt peut dépendre de la quantité de valeurs des indicateurs ou de l'intervalle de temps entre le changement abrupt éventuel et la dernière valeur d'indicateurs.

Les indicateurs de surveillance du dispositif sont généralement calculés après chaque phase de fonctionnement du dispositif, et plus particulièrement après chaque vol de l'aéronef dans le cas où le dispositif surveillé fait partie d'un aéronef. Cependant, chaque indicateur peut être calculé pendant le fonctionnement du dispositif ou bien au cours du vol de l'aéronef.

Chaque indicateur est ainsi représenté par un signal qui peut être continu, c'est-à-dire analogique, ou bien discrétisé, c'est à dire numérique. De préférence, le signal de chaque indicateur est discrétisé. En outre, l'échantillonnage de chaque indicateur peut être régulier, c'est à dire à une fréquence d'échantillonnage donnée et constante. L'échantillonnage de chaque indicateur peut également être irrégulier. On ne peut plus dans ce cas parler d'une fréquence d'échantillonnage, l'intervalle de temps entre deux échantillons n'étant pas constant.

Pour calculer chaque signal d'un indicateur, on acquiert par exemple au moins une mesure issue des différents capteurs positionnés sur ce dispositif ou à proximité de ce dispositif. Ces mesures réalisées sur le dispositif constituent un signal correspondant généralement à un signal sonore ou bien un signal vibratoire par exemple. Puis, on calcule au moins un signal d'un indicateur en fonction de ces mesures.

Ensuite, ces signaux des indicateurs de surveillance sont ajoutés à l'historique de ces indicateurs. Ces signaux des indicateurs peuvent être ajoutés à l'historique pendant le fonctionnement du dispositif ou bien après le fonctionnement du dispositif.

Dans le cas où le dispositif est situé dans un aéronef, ces signaux des indicateurs sont généralement ajoutés à cet historique après un vol de cet aéronef. Cependant, ces signaux peuvent également être ajoutés à cet historique au cours d'un vol de cet aéronef. On parle alors d'un traitement embarqué des indicateurs.

Au moins un changement abrupt éventuel peut alors être recherché pour chaque groupe d'indicateurs incluant un ou plusieurs signal(aux) de ces indicateurs. Ce changement abrupt éventuel est recherché à partir de l'ensemble des indicateurs d'un groupe d'indicateurs et peut être monodimensionnel si le groupe d'indicateurs comporte un seul indicateur ou bien multidimensionnel si le groupe d'indicateurs comporte au moins deux indicateurs.

Au sein d'un groupe d'indicateurs, il y a potentiellement un ou plusieurs changements abrupts éventuels, chaque changement abrupt éventuel correspondant à une variation soudaine et importante du signal de l'indicateur.

En outre, au sein d'un même groupe d'indicateurs, les signaux de chaque indicateur sont normalement synchronisés, c'est-à-dire qu'un changement abrupt apparait généralement au même moment sur ces signaux. Cependant, il est possible qu'il y ait un décalage lié par exemple à l'échantillonnage, régulier ou irrégulier, des signaux dans le cas de signaux numériques. De plus, les mesures de chaque capteur et, par suite, les signaux des indicateurs peuvent de pas être synchronisés, chacun pouvant avoir une fréquence d'échantillonnage propre.

Le signal de chaque indicateur peut être décomposé suivant des portions temporelles pouvant se recouvrir. On parle par exemple de « fenêtres glissantes ». Dans chacune de ces portions temporelles, on recherche la présence d'un seul changement abrupt éventuel. L'intérêt de cette décomposition en portions temporelles est de balayer l'ensemble du signal d'un indicateur et de détecter un nombre illimité de changements abrupts sur l'ensemble de ce signal.

La taille de chaque portion temporelle est fixée par retour d'expérience et de manière à atteindre le compromis désiré entre le taux de détection de défauts et le taux de fausses alarmes. En pratique, dans le cas d'un signal échantillonné, cette portion temporelle contient un nombre fixe de valeurs de l'indicateur. Cependant, dans le cas où le nombre de valeurs contenues dans cette portion temporelle est insuffisant, la taille de cette portion temporelle augmente avec l'arrivée de nouvelles valeurs jusqu'à contenir un nombre de valeurs suffisant.

Par ailleurs, cette portion temporelle « glisse » en permanence afin de balayer l'ensemble du signal, d'où la dénomination de « fenêtres glissantes ». Dans ce cas, on ajoute des nouvelles valeurs et on supprime les valeurs les plus anciennes afin que cette portion temporelle soit de taille constante.

La taille de la portion temporelle peut cependant varier dans le cas d'un signal échantillonné de manière irrégulière dans le temps, l'important étant que le nombre de valeurs contenues dans cette portion temporelle soit constant. Par exemple, cette portion temporelle comporte quelques dizaine de valeurs du signal de l'indicateur. Cette portion temporelle peut couvrir une ou plusieurs phases de fonctionnement du dispositif surveillé ou bien, dans le cas de surveillance d'un dispositif embarqué dans un aéronef, un ou plusieurs vols de cet aéronef.

Pour caractériser chaque signal d'un indicateur ou bien, de préférence, chaque groupe d'indicateurs, on peut définir un modèle paramétrique en fonction du temps sur chaque portion temporelle. Ce modèle paramétrique est notamment défini en fonction du retour d'expérience et de l'analyse de l'historique de cet indicateur. On appelle « modèle paramétrique » une expression analytique qui permet de représenter un signal tel qu'une loi de densité de probabilités qui intègre un ensemble de paramètres. Il existe des formules paramétriques connues, telles que la loi gaussienne, la loi de Poisson ou bien la distribution de Weibull. On choisira d'appliquer la formule la plus adaptée au signal d'indicateur en fonction de l'allure de ce signal ou bien suivant un test statistique par exemple.

Ce modèle paramétrique peut être défini sur une portion temporelle par deux lois, une première loi modélisant ce signal jusqu'à l'apparition d'un changement abrupt éventuel et une seconde loi modélisant ce signal après ce changement abrupt éventuel. Par exemple, pour un signal discrétisé $s(t)$ d'un signal comportant des échantillons $(x_1$ à $x_k)$ le

modèle paramétrique de ce signal est : $S_t(x_1,...,x_k) = \begin{array}{l} f_{a_1,...,a_n,t}(x_1,...,x_i) \; si \; t \leq t_{saut} \\ g_{b_1,...,b_m,t}(x_{i+1},...,x_k) \; si \; t > t_{saut} \end{array}$ , $m$ et $n$ étant des

entiers, $a_1$ à $a_n$ et $b_l$ à $b_m$ étant des paramètres de ce modèle et $t_{saut}$ étant la date à laquelle survient le changement abrupt éventuel. L'échantillon $x_i$ est le dernier échantillon avant ce changement abrupt éventuel alors que l'échantillon $x_{i+1}$ est le premier échantillon après ce changement abrupt éventuel. Les fonctions f et g peuvent inclure différentes manières de modéliser le signal en utilisant au moins un paramètre discret, la meilleure manière étant ensuite sélectionnée par régression, ces paramètres étant déterminés par exemple par la méthode connue des moindres carrés. Cette méthode de modélisation des signaux permet de modéliser la distribution du signal, par exemple selon une loi gaussienne, ou bien le signal lui-même.

Un tel modèle paramétrique peut comporter une ou plusieurs formules analytiques ou lois potentiellement de types différents représentant le signal avant et après cette date $t_{saut}$ qui est elle-même un paramètre de ce modèle paramétrique. Le modèle utilisé est préalablement établi en fonction du retour d'expérience sur les données, par exemple en fonction des types d'indicateurs ou des conditions d'acquisition.

On définit une amplitude du changement abrupt éventuel $H_{saut}$ par une loi H qui est fonction de ces paramètres $a_1$ à $a_n$ et $b_1$ à $b_m$ selon la formule $H_{saut} = H(a_1,...,a_n,b_1,...,b_m)$. Cette amplitude $H_{saut}$ est définie par l'observation des amplitudes et variations de ces indicateurs, de manière à représenter au mieux une mesure de l'écart entre deux modèles avant et après le changement abrupt éventuel. Cette amplitude $H_{saut}$ est généralement monodimensionnelle et positive. Par exemple, si les fonctions $f$ et $g$ sont des lois gaussiennes uniquement paramétrées par leurs moyennes $a_1$ et $b_1$, alors on peut définir que $H_{saut} = |b_1 - a_1|$.

On compare ensuite cette amplitude du changement abrupt éventuel $H_{saut}$ au seuil de changement abrupt afin de déterminer si ce changement abrupt éventuel est un changement abrupt avéré. En effet, si cette amplitude du changement abrupt éventuel $H_{saut}$ est inférieure à ce seuil de changement abrupt, il n'est pas significatif d'un risque qu'un événement brutal correspondant à une action de maintenance, une panne ou une dégradation du dispositif surveillé se soit produit. Par contre, si cette amplitude du changement abrupt éventuel $H_{saut}$ est supérieure ou égale à ce seuil de changement abrupt, un risque existe qu'un tel événement brutal se soit produit et ce changement abrupt est avéré.

Cependant, cette amplitude $H_{saut}$ peut être multidimensionnelle. Dans ce cas, le seuil de changement abrupt est également multidimensionnel et de même dimension que l'amplitude $H_{saut}$ afin d'être comparé à cette amplitude $H_{saut}$. Une relation d'ordre est alors définie entre cette amplitude $H_{saut}$ et le seuil de changement abrupt afin de les comparer. Il est ainsi possible, par exemple, de hiérarchiser, c'est-à-dire donner une importance plus grande, à une ou plusieurs dimension(s) de cette amplitude $H_{saut}$ par rapport aux autres.

De plus, le seuil de changement abrupt peut être ajusté en fonction de la date $t_{saut}$ du changement abrupt éventuel et plus particulièrement de la quantité d'acquisition faite par le procédé avant et après cette date $t_{saut}$. En effet, dans le cas par exemple où le signal est échantillonné et s'il y a peu de mesures après cette date $t_{saut}$, il y a un risque qu'il ne s'agisse pas d'un changement abrupt avéré, mais de valeurs aberrantes. Dans ce cas, il est intéressant que le seuil de changement abrupt soit plus important afin de s'assurer qu'il s'agisse bien d'un changement abrupt avéré et non de valeurs aberrantes. Cela permet donc d'utiliser la méthode en continu tout en étant plus robuste.

Par exemple, on définit un seuil de changement abrupt $H_0$ par une fonction paramétrée par des paramètres $c_1$ à $c_p$ définissant ainsi le seuil $H_0$, les paramètres $c_1$ à $c_p$ permettant d'ajuster ce seuil $H_0$ afin d'optimiser, selon le retour d'expérience le rapport taux de détection de défauts/taux de fausses alarmes. $p$ est un entier correspondant au

nombre de paramètres $c_1$ à $c_p$.

Par exemple $H_0 = \alpha \cdot c_1 + \beta \cdot c_2$ $\alpha$ et $\beta$ étant des coefficients pouvant dépendre des nombres de valeurs contenues dans des parties de portion temporelle situées respectivement avant le changement abrupt éventuel et après le changement abrupt éventuel.

Ensuite, un événement brutal peut être déclaré en fonction d'un changement abrupt avéré sur un ou plusieurs signal(aux) et selon une règle de fusion logique. Cette règle de fusion logique fait intervenir un ou plusieurs changement(s) abrupt(s) avéré(s) d'un ou plusieurs groupe(s) d'indicateurs. De plus, les changements abrupts avérés utilisés sont détectés pendant un intervalle de temps prédéterminé et configurable.

Selon une première règle logique, un événement brutal est déclaré sur ce dispositif si l'on détecte un changement abrupt avéré sur au moins un groupe d'indicateurs. Selon une seconde règle logique, on déclare un événement brutal sur ce dispositif lorsque certains groupes d'indicateurs prédéterminés comporte un changement abrupt avéré, ces groupes d'indicateurs prédéterminés étant par exemple définis selon le ou les types d'indicateurs choisis pour chaque groupe. Selon une troisième règle logique, on déclare un événement brutal sur ce dispositif lorsque chaque groupe d'indicateurs du dispositif surveillé comporte un changement abrupt avéré.

Cet intervalle de temps prédéterminé et configurable prend en compte la date $t_{saut}$ du changement abrupt avéré pour chaque groupe, le fait que les signaux des indicateurs de groupe différents peuvent ne pas être synchronisés ainsi que la précision du calcul des changements abrupts éventuels. En outre, comme évoqué précédemment, au moins un groupe d'indicateurs peut ne pas contenir assez de données pour déterminer de façon fiable un changement abrupt avéré. Dans ce cas, un décalage d'une ou plusieurs portion(s) temporelles selon le principe des fenêtres glissantes est nécessaire pour l'acquisition de données supplémentaires. De fait, l'intervalle de temps prédéterminé et configurable est augmenté pour prendre en compte ce décalage.

Cet intervalle de temps prédéterminé peut être déterminé par retour d'expérience, notamment en fonction de la durée moyenne de fonctionnement du dispositif et du taux d'acquisition moyen des mesures des différents capteurs.

Dans le cas d'un aéronef, cet intervalle de temps prédéterminé peut être déterminé notamment en fonction de la durée moyenne des vols de l'aéronef et du taux d'acquisition moyen des mesures des différents capteurs embarqués par vol.

De plus, afin de caractériser cet événement brutal dans le temps, on lui associe une date de l'événement brutal. Cette date de l'événement brutal correspond à la date la plus récente parmi les dates $t_{saut}$ des changements abrupts avérés entrant dans les règles de fusion logiques précédemment évoquées.

Tout événement brutal déclaré peut être significatif d'un changement d'état survenu sur le dispositif suite à un défaut, une dégradation ou bien une panne sur ce dispositif. Cependant, ce changement d'état peut faire suite à une opération humaine réalisée préalablement sur le dispositif surveillé.

Premièrement, si ce changement d'état a lieu entre deux phases de fonctionnement de ce dispositif, il fait suite à une opération humaine réalisée préalablement sur le dispositif, telle une action de maintenance, un changement de configuration ou de définition de ce dispositif. Dans ce cas, les seuils de détection de défauts correspondant aux groupes d'indicateurs impactés par cette opération humaine doivent être recalculés afin de prendre en compte les modifications apportées à ce dispositif et de limiter le taux de fausses alarmes et/ou de non détection. Un processus de réapprentissage est alors engagé automatiquement sur le dispositif pour mettre à jour le calcul de ces nouveaux seuils de détection de défauts. Cependant, pour s'assurer qu'une opération humaine a bien été réalisée sur le dispositif, une confirmation peut, dans une variante du procédé selon l'invention, être demandée à l'utilisateur. Cette variante permet d'éviter de lancer un réapprentissage inutile.

Par ailleurs, ce réapprentissage peut être engagé avec une marge de sécurité sur une éventuelle erreur d'estimation de la date de l'événement brutal. Ce réapprentissage est alors engagé après cette date de l'événement brutal à laquelle est ajoutée une durée prédéterminé, par exemple relatif à quelques mesures d'échantillonnage dans le cas d'un signal numérique.

Dans le cas particulier où le dispositif est intégré à un aéronef à voilure tournante, ce changement d'état faisant suite à une opération humaine a lieu entre deux phases de fonctionnement de l'aéronef, par exemple entre deux vols de cet aéronef. Le processus de réapprentissage engagé limite, voire évite alors l'apparition de fausses alarmes suite à cette opération humaine. En effet, le taux d'alarme observé sur les aéronefs à voilure tournante contient plus de 50% de fausses alarmes faisant suite à une opération de maintenance et dues principalement à l'oubli de réapprentissage de ces seuils de changement abrupt de la part des opérateurs.

Deuxièmement, si ce changement d'état a lieu pendant une phase de fonctionnement de ce dispositif, il s'agit probablement d'un défaut, d'une dégradation ou bien d'une panne sur le dispositif surveillé. Une alarme est alors déclenchée par le procédé afin d'alerter de la présence de ce défaut, de cette dégradation ou bien de cette panne sur le dispositif surveillé. Par contre, aucun processus de réapprentissage des seuils de détection de défauts n'est nécessaire, tout du moins tant que les actions liées à la prise en compte de l'alarme n'ont pas été effectuées. Cependant, suite à cette alarme, une action de maintenance ou bien un changement de configuration peut être réalisé sur le dispositif. Dans ce cas, un réapprentissage des seuils de détection de défauts doit alors être engagé.

Dans le cas particulier où le dispositif est intégré à un aéronef à voilure tournante, ce changement d'état significatif de l'apparition d'un défaut sur le dispositif a lieu pendant une phase de fonctionnement de l'aéronef, par exemple pendant un vol de cet aéronef.

En outre, ce changement d'état peut être consécutif à un comportement anormal du dispositif, lié par exemple à un mode de fonctionnement inhabituel de ce dispositif. Dans ce cas, aucun défaut avéré n'a été détecté, mais ce comportement anormal du dispositif nécessite tout de même d'être analysé afin de déterminer par exemple son origine. Une alarme est alors également déclenchée par le procédé afin d'alerter de ce comportement anormal du dispositif.

Pour déterminer si ce changement d'état survenu sur le dispositif a lieu entre deux phases de fonctionnement de ce dispositif ou bien pendant une phase de fonctionnement de ce dispositif, on peut par exemple comparer la date de l'événement brutal avec les dates d'utilisation de ce dispositif.

En outre, ce procédé peut être utilisé en combinant les différentes mesures des capteurs du dispositif de deux façons. Tout d'abord, on peut combiner dès le départ, différentes mesures de ces capteurs afin de former un seul indicateur, chaque mesure représentant une composante du signal de cet indicateur. On peut également séparer chaque mesure de sorte que chaque mesure forme un indicateur, une fusion des indicateurs pouvant être faite par la suite lors de la détermination d'éventuels événements brutaux, par exemple à travers les règles de fusion logiques.

La présente invention a aussi pour objet un moyen de prise en compte d'un changement abrupt d'au moins un indicateur de surveillance d'un dispositif afin de mettre en oeuvre le procédé précité.

Le dispositif surveillé étant muni d'une pluralité de capteurs, un tel moyen de prise en compte d'un changement abrupt d'au moins un indicateur de surveillance d'un dispositif comporte alors :

- un moyen de centralisation muni d'au moins un calculateur central et d'au moins une première mémoire,

- un système d'acquisition des mesures de ces capteurs de mesures muni d'au moins un calculateur d'acquisition et d'au moins une seconde mémoire et

- au moins un moyen de transfert entre ce système d'acquisition et ce moyen de centralisation.

Ce moyen de prise en compte d'un changement abrupt d'au moins un indicateur de surveillance d'un dispositif est ainsi capable de mettre en oeuvre le procédé évoqué précédemment.

De préférence, la première mémoire stocke l'historique des indicateurs et le calculateur central détermine un seuil de changement abrupt pour chaque groupe d'indicateurs en fonction de cet historique. De plus, le moyen de transfert permet de transférer les mesures des capteurs du système d'acquisition vers le moyen de centralisation, ce moyen de centralisation calculant alors les indicateurs.

Le calculateur central permet ensuite de calculer au moins un changement abrupt éventuel parmi ces indicateurs et de le comparer avec le seuil de changement abrupt, puis de déterminer si ce changement abrupt est avéré.

Enfin, le calculateur central permet de déterminer, selon une règle logique, si ce changement abrupt avéré correspond à un événement brutal déclaré et d'y associer une date de l'évènement brutal, puis d'agir en fonction de cette date de l'événement brutal.

Cependant, le calculateur d'acquisition peut également calculer chaque signal d'au moins un indicateur de surveillance de ce dispositif, ces signaux étant stockés temporairement dans la seconde mémoire. Puis, le moyen de transfert permet de transférer ces signaux des indicateurs entre le système d'acquisition et le moyen de centralisation et d'ajouter ces signaux à l'historique des indicateurs stocké dans la première mémoire.

Selon un mode de réalisation préféré de l'invention ce dispositif permet de prendre en compte un changement abrupt d'au moins un indicateur de surveillance d'un dispositif intégré à un aéronef à voilure tournante. Dans ce cas, le système d'acquisition des mesures de ces capteurs est intégré à l'aéronef, alors que le moyen de centralisation peut être intégré à l'aéronef ou appartenir à une station au sol.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé selon l'invention,

- la figure 2, un aéronef à voilure tournante muni du moyen de prise en compte d'un changement abrupt d'au moins un indicateur de surveillance d'un dispositif selon l'invention, et

- la figure 3, deux graphiques représentant respectivement un signal d'un indicateur.

Les éléments présents dans plusieurs figures distinctes sont affectés d'une seule et même référence.

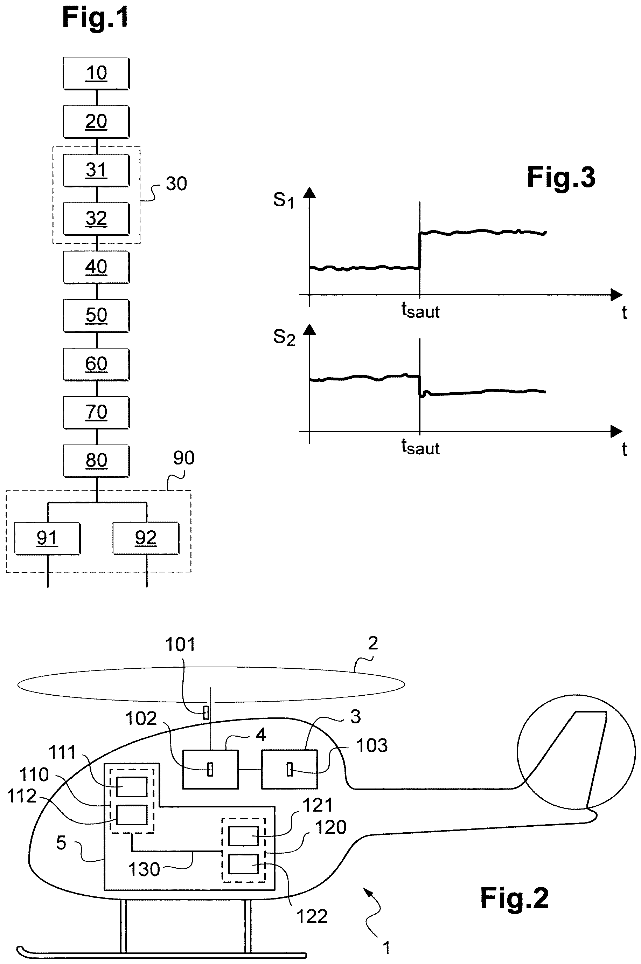

La figure 1 représente le schéma synoptique d'un procédé selon l'invention de détection et de prise en compte d'un changement abrupt d'au moins un indicateur de surveillance d'un dispositif 4, comportant neuf étapes principales.

La figure 2 représente un aéronef 1 à voilure tournante muni d'un moyen de détection et de prise en compte 5 d'un changement abrupt d'au moins un indicateur de surveillance d'un dispositif 4, ce moyen de prise en compte 5 étant capable de mettre en oeuvre le procédé représenté sur la figure 1.

La figure 3 décrit deux signaux de deux indicateurs de surveillance de ce dispositif 4.

Cet aéronef 1 décrit sur la figure 2 comporte au moins un moteur thermique 3 entraînant un organe de transmission de puissance 4, telle une boîte de transmission principale de puissance, qui entraîne en rotation un rotor principal 2.

Cet aéronef 1 comporte au moins trois capteurs 101,102,103, positionnés respectivement au niveau du rotor principal 2, de l'organe de transmission de puissance 4 et du moteur thermique 3. Ces capteurs 101,102,103 permettent par exemple de surveiller un dispositif 4 de l'aéronef 1 tel que l'organe de transmission de puissance.

Le moyen de détection et de prise en compte 5 comporte un moyen de centralisation 120 muni d'un calculateur central 121 et d'une première mémoire 122 ainsi qu'un système d'acquisition 110 de mesures muni d'un calculateur d'acquisition 111 et d'une seconde mémoire 112. Ce moyen de détection et de prise en compte 5 comporte également un moyen de transfert 130 permettant le transfert de données entre ce système d'acquisition 110 et ce moyen de centralisation 120.

Lors d'une étape 10 du procédé selon l'invention, on répartit les indicateurs de surveillance de ce dispositif 4 dans au moins un groupe d'indicateurs. Ces indicateurs permettent de surveiller le dispositif 4 par l'intermédiaire notamment des trois capteurs 101,102,103 et de leurs mesures.

L'ensemble des indicateurs de surveillance du dispositif 4 est conservé dans la première mémoire 122 du moyen de centralisation 120, formant ainsi un historique de ces indicateurs de surveillance.

Lors d'une étape 20 du procédé selon l'invention, on détermine un seuil de changement abrupt pour chaque groupe d'indicateurs. Ce seuil de changement abrupt est défini par le calculateur central 121 à partir de cet historique des indicateurs stocké dans la première mémoire 122.

Ce seuil de changement abrupt est une limite pour l'amplitude d'un changement abrupt éventuel de ce groupe d'indicateurs dont le dépassement signifie qu'un changement d'état brutal potentiel de ce dispositif 4 a été détecté.

Lors d'une étape 30 du procédé selon l'invention, on calcule un signal d'au moins un indicateur de surveillance du dispositif 4.

Les signaux des indicateurs de surveillance du dispositif 4 sont calculés à partir des mesures des capteurs 101,102,103 par l'intermédiaire du calculateur d'acquisition 111 pendant le fonctionnement du dispositif 4 et pendant le vol de l'aéronef 1. Ces signaux des indicateurs sont stockés temporairement dans la seconde mémoire 112 du système d'acquisition 110 durant le vol de l'aéronef 1. Chaque indicateur est ainsi représenté par un signal.

Cependant, ces signaux des indicateurs de surveillance peuvent également être calculés par l'intermédiaire du calculateur central 121, les mesures des capteurs 101,102,103 étant alors transférées du moyen d'acquisition 110 vers le moyen de centralisation 120 par le moyen de transfert 130. Ce transfert et ce calcul peuvent avoir lieu pendant le vol de l'aéronef 1 ou bien après le vol de cet aéronef 1. Ces signaux des indicateurs sont stockés dans la première mémoire 122.

Cette étape 30 peut se décomposer en deux étapes 31 et 32. Au cours de l'étape 31, on acquiert des mesures issues des différents capteurs 101,102,103 positionnés sur ce dispositif 4 ou à proximité. Puis au cours de l'étape 32, on calcule un signal d'au moins un indicateur en fonction de ces mesures.

La figure 3 représente les signaux de deux indicateurs $S_1(t)$ et $S_2(t)$ en fonction du temps, ces deux indicateurs formant par exemple un groupe d'indicateurs.

Lors d'une étape 40 du procédé selon l'invention, on ajoute chaque signal des indicateurs de surveillance à l'historique de ces indicateurs. De préférence, ces signaux des indicateurs sont transférées de la seconde mémoire 112 du système d'acquisition 110 vers la première mémoire 122 du calculateur central 121 par l'intermédiaire du moyen de transfert 130 afin d'être ajoutées à l'historique des indicateurs après le vol de l'aéronef 1.

Cependant, ce transfert des données peut avoir lieu pendant le vol de cet aéronef 1.

De plus, le moyen de centralisation 120 peut être embarqué dans l'aéronef 1 ainsi que le moyen de transfert 130, comme représenté sur la figure 2, ou bien appartenir à une station restant au sol.

Lors d'une étape 50 du procédé selon l'invention, on recherche, par l'intermédiaire du calculateur central 121 pour chaque groupe d'indicateurs incluant un signal d'indicateurs, au moins un changement abrupt éventuel et une date de ce changement abrupt éventuel.

La figure 3 représente la variation des signaux de deux indicateurs $S_1(t)$ et $S_2(t)$, chaque indicateur comportant un changement abrupt éventuel. On constate que ces deux changements abrupts éventuels se sont produits à la même date $t_{saut}$, ces deux indicateurs étant synchronisés.

Chaque indicateur $S_1(t)$ et $S_2(t)$ peut être défini par un modèle paramétrique comportant deux lois, une première loi modélisant cet indicateur jusqu'à la date $t_{saut}$ d"apparition de ce changement abrupt éventuel et une seconde loi modélisant cet indicateur après cette date $t_{saut}$ tel que : $S_1(t) = \begin{array}{l} f_{a_1,...,a_n}(t) \ si \ t \le t_{saut} \\ g_{b_1,...,b_m}(t) \ si \ t > t_{saut} \end{array}$ , $m$ et $n$ étant des entiers,

$a_1$ à $a_n$ et $b_1$ à $b_m$ étant des paramètres de ce modèle. Les paramètres $a_1$ à $a_n$ et $b_1$ à $b_m$ peuvent être déterminés par exemple par la méthode connue des moindres carrés.

On peut ensuite définir une amplitude du changement abrupt éventuel $H_{saut}$ de l'indicateur $S_1(t)$ selon une loi $H$ qui est fonction des paramètres $a_1$ à $a_n$ et $b_1$ à $b_m$, selon la formule $H_{saut} = H(a_1,...,a_n,b_1,...,b_m)$.

Lors d'une étape 60 du procédé selon l'invention, on compare par l'intermédiaire du calculateur central 121 cette amplitude du changement abrupt éventuel $H_{saut}$ au seuil de changement abrupt afin de déterminer si ce changement abrupt éventuel est un changement abrupt avéré. Ainsi, lorsque cette amplitude du changement abrupt éventuel $H_{saut}$ est supérieure à ce seuil de changement abrupt, ce changement abrupt est avéré et est significatif d'un risque qu'un événement brutal correspondant à une action de maintenance, à un défaut, à une dégradation ou bien à une panne du dispositif 4 surveillé se soit produit. Dans le cas contraire, ce changement abrupt éventuel est ignoré.

Lors d'une étape 70 du procédé selon l'invention, on détermine par l'intermédiaire du calculateur central 121 qu'un événement brutal est déclaré selon une règle logique à partir d'au moins - un changement abrupt avéré d'au moins un groupe d'indicateurs.

Cette règle de fusion logique peut faire intervenir un ou plusieurs changement(s) abrupt(s) avéré(s) d'un ou plusieurs groupe(s) d'indicateurs. De plus, les changements abrupts avérés sont détectés pendant un intervalle de temps prédéterminé et configurable.

Par exemple, selon une première règle logique, un événement brutal est déclaré sur un dispositif 4 si l'on détecte un changement abrupt avéré sur au moins un groupe d'indicateurs. Selon une autre règle logique, on déclare un événement brutal sur ce dispositif 4 lorsque certains groupes d'indicateurs prédéterminés comportent un changement abrupt avéré ou bien lorsque chaque groupe d'indicateurs comporte un changement abrupt avéré.

Cet intervalle de temps prédéterminé et configurable prend notamment en compte la date $t_{saut}$ du changement abrupt avéré pour chaque groupe et le fait que les signaux des indicateurs de groupe différents peuvent ne pas être synchronisés en temps ainsi que la précision du calcul des changements abrupts éventuels.

Lors d'une étape 80 du procédé selon l'invention, on associe à cet événement brutal déclaré une date de l'événement brutal qui est la date la plus récente des changements abrupts avérés ayant permis de déterminer cet événement brutal.

Lors d'une étape 90 du procédé selon l'invention, on agit alors en fonction de la date de l'évènement brutal, cet événement brutal déclaré pouvant être significatif d'un défaut, d'une dégradation ou bien d'une panne sur ce dispositif 4 de l'aéronef ou bien être une fausse alerte, par exemple liée à une action de maintenance pour laquelle l'opérateur n'a pas lancé de réapprentissage des seuils de détection de défauts.

Si ce changement d'état a lieu entre deux phases de fonctionnement de l'aéronef, et plus particulièrement deux vols, il fait suite à une opération humaine réalisée préalablement sur l'aéronef, telle une action de maintenance, un changement de configuration ou de définition de ce dispositif 4. Au cours d'une étape 91, un processus de réapprentissage des seuils de détection de défauts correspondant aux indicateurs impactés par cette opération humaine est alors engagé afin de prendre en compte les modifications apportées à l'aéronef et de limiter le taux de fausses alarmes et/ou de non détection.

Cependant, pour s'assurer qu'une opération humaine a bien été réalisée sur l'aéronef, une confirmation peut être demandée à l'utilisateur afin de ne pas exécuter un réapprentissage inutile.

Si ce changement d'état a lieu pendant une phase de fonctionnement de l'aéronef et plus particulièrement un vol de l'aéronef, il s'agit probablement d'un défaut, d'une dégradation ou bien d'une panne de ce dispositif 4 de l'aéronef. Au cours d'une étape 92, une alarme est alors déclenchée par le procédé afin d'alerter de la présence de ce défaut, aucun processus de réapprentissage des seuils de détection de défauts n'étant nécessaire, tout du moins tant que les actions liées à la prise en compte de l'alarme n'ont pas été effectuées. Par exemple, suite à cette alarme, une action de maintenance ou bien un changement de configuration est réalisé sur le dispositif 4 et, par suite, un réapprentissage des seuils de détection de défauts doit alors être engagé.

Cependant, ce changement d'état peut également faire suite à un comportement anormal du dispositif 4. Au cours de l'étape 92, une alarme est également déclenchée par le procédé afin d'alerter de ce comportement anormal du dispositif 4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie par les revendications annexées.

**Revendications**

**1.** Procédé de détection et de prise en compte d'un changement abrupt d'au moins un indicateur de surveillance d'un dispositif (4), le procédé mis en oeuvre par un moyen de détection et de prise en compte, au cours duquel

- on répartit lesdits indicateurs de surveillance dudit dispositif (4) dans au moins un groupe d'indicateurs,
- on détermine un seuil de changement abrupt pour chaque groupe d'indicateurs en fonction d'un historique desdits indicateurs,
- on calcule, après une phase de fonctionnement dudit dispositif, un signal d'au moins un indicateur de surveillance dudit dispositif (4) à partir des mesures d'au moins un capteur dudit dispositif (4),
- on ajoute lesdits signaux desdits indicateurs audit historique desdits indicateurs,
- on recherche pour chaque groupe d'indicateurs au moins un changement abrupt éventuel et une date dudit changement abrupt éventuel,
- on compare chaque changement abrupt éventuel avec ledit seuil de changement abrupt dudit groupe d'indicateurs, ledit changement abrupt étant avéré lorsqu'une amplitude dudit changement abrupt éventuel est supérieure audit seuil de changement abrupt,
- on détermine qu'un événement brutal est déclaré selon une règle logique à partir d'au moins un changement abrupt avéré d'au moins un groupe d'indicateurs,
- on associe audit événement brutal une date dudit événement brutal qui est la date la plus récente desdits changements abrupts avérés ayant permis de déterminer ledit événement brutal, et
- on agit en fonction de ladite date dudit événement brutal.

**2.** Procédé selon la revendication 1,
**caractérisé en ce que**, pour calculer chaque signal d'un indicateur de surveillance dudit dispositif (4), on acquiert tout d'abord au moins une mesure réalisée sur ledit dispositif (4), puis on calcule un signal dudit indicateur en fonction desdites mesures.

**3.** Procédé selon l'une quelconque des revendications 1 à 2, **caractérisé en ce que** l'on recherche un changement abrupt éventuel à partir d'un seul indicateur.

**4.** Procédé selon l'une quelconque des revendications 1 à 2 **caractérisé en ce que** l'on recherche un changement abrupt éventuel à partir d'au moins deux indicateurs.

**5.** Procédé selon l'une quelconque des revendications 1 à 4, **caractérisé en ce qu'**un événement brutal est déclaré lorsque ledit changement abrupt avéré est détecté dans au moins un groupe d'indicateurs.

**6.** Procédé selon l'une quelconque des revendications 1 à 4, **caractérisé en ce qu'**un événement brutal est déclaré lorsque ledit changement abrupt avéré est détecté dans chaque groupe d'indicateurs.

**7.** Procédé selon l'une quelconque des revendications 1 à 6, **caractérisé en ce que** ledit seuil de changement abrupt est déterminé pour chaque groupe d'indicateurs en fonction dudit historique desdits indicateurs et de ladite date dudit changement abrupt avéré.

**8.** Procédé selon l'une quelconque des revendications 1 à 7, **caractérisé en ce qu'**un événement brutal est déclaré lorsqu'au moins un changement abrupt avéré est détecté sur un intervalle de temps prédéterminé.

**9.** Procédé selon l'une quelconque des revendications 1 à 8, **caractérisé en ce que**, ledit dispositif (4) étant installé dans un aéronef à voilure tournante, on ajoute lesdites nouvelles valeurs desdits indicateurs audit historique desdits indicateurs au cours d'une phase de fonctionnement dudit aéronef.

**10.** Procédé selon l'une quelconque des revendications 1 à 8,
**caractérisé en ce que**, ledit dispositif (4) étant installé dans un aéronef à voilure tournante, on ajoute lesdites nouvelles valeurs desdits indicateurs audit historique desdits indicateurs après une phase de fonctionnement dudit aéronef.

**11.** Procédé selon l'une quelconque des revendications 1 à 10,
**caractérisé en ce que**, ledit dispositif (4) étant installé dans un aéronef à voilure tournante, on détermine ledit seuil de changement abrupt pour chaque groupe d'indicateurs, puis on recherche pour chaque groupe d'indicateurs au moins un changement abrupt éventuel et une date dudit changement abrupt éventuel après une phase de fonctionnement dudit aéronef.

**12.** Procédé selon l'une quelconque des revendications 1 à 9,
**caractérisé en ce que**, ledit dispositif (4) étant installé dans un aéronef à voilure tournante, on détermine ledit seuil de changement abrupt pour chaque groupe d'indicateurs, puis on recherche pour chaque groupe d'indicateurs au moins un changement abrupt éventuel et une date dudit changement abrupt éventuel au cours d'une phase de fonctionnement dudit aéronef.

**13.** Procédé selon l'une quelconque des revendications 1 à 12,
**caractérisé en ce que**, ledit dispositif (4) étant installé dans un aéronef à voilure tournante, si ladite date dudit événement brutal est située entre deux phases de fonctionnement dudit aéronef, on engage un réapprentissage des seuils de détection de défauts desdits indicateurs.

**14.** Procédé selon la revendication 13,
**caractérisé en ce que** ledit réapprentissage desdits seuils de détection de défauts est engagé après ladite date dudit événement brutal et après un délai prédéterminé.

**15.** Procédé selon l'une quelconque des revendications 13 à 14,
**caractérisé en ce que** ledit réapprentissage desdits seuils de détection de défauts est engagé après une confirmation qu'une opération humaine a bien été réalisée.

**16.** Procédé selon l'une quelconque des revendications 1 à 15, **caractérisé en ce que**, ledit dispositif (4) étant installé dans un aéronef à voilure tournante, si ladite date dudit événement brutal est située pendant une phase de fonctionnement dudit aéronef, on génère une alarme indiquant une dégradation d'un dispositif (4) dudit aéronef.

**17.** Procédé selon l'une quelconque des revendications 1 à 16,
**caractérisé en ce que** chaque groupe d'indicateurs est modélisé par un modèle paramétrique en fonction du temps sur une portion temporelle, ledit modèle paramétrique étant :

$$S_t(x_1,...,x_k) = \begin{array}{l} f_{a_1,...,a_n,t}(x_1,...,x_i) \; si \; t \leq t_{saut} \\ g_{b_1,...,b_m,t}(x_{i+1},...,x_k) \; si \; t > t_{saut} \end{array},$$

$m$ et $n$ étant des entiers,
$a_1$ à $a_n$ et $b_1$ à $b_m$ étant des paramètres dudit modèle paramétrique,
$t_{saut}$ étant ladite date dudit changement abrupt éventuel, et
$x_i$ étant un échantillon précédant ledit changement abrupt éventuel et $x_{i+1}$ un échantillon apparaissant juste après ledit changement abrupt éventuel, et
puis on définit une amplitude dudit changement abrupt éventuel $H_{saut}$ selon une formule $H_{saut} = H(a_1,...,a_n,b_1,...,b_m)$.

**18.** Moyen de détection et de prise en compte (5) d'un changement abrupt d'au moins un indicateur de surveillance d'un dispositif (4), ledit dispositif (4) comportant une pluralité de capteurs (101,102,103) de mesures, ledit moyen de prise en compte (5) comportant :

- un moyen de centralisation (120) muni d'au moins un calculateur central (121) et d'au moins une première mémoire (122),
- un système d'acquisition (110) des mesures desdits capteurs (101,102,103) de mesures muni d'au moins un calculateur d'acquisition (111) et d'au moins une seconde mémoire (112), et
- au moins un moyen de transfert (130) entre ledit système d'acquisition (120) et ledit moyen de centralisation (130),

**caractérisé en ce que** ledit moyen de détection et de prise en compte (5) est adapté pour mettre en oeuvre le procédé selon l'une quelconque de revendications 1 à 17.

**Patentansprüche**

1. Verfahren zum Erfassen und Berücksichtigen einer abrupten Änderung mindestens eines Überwachungsindikators einer Vorrichtung (4), wobei das Verfahren durch ein Erfassungs- und Berücksichtigungsmittel durchgeführt wird, in dessen Verlauf

   - die Überwachungsindikatoren der Vorrichtung (4) in mindestens einer Gruppe von Indikatoren verteilt werden,
   - für jede Gruppe von Indikatoren in Abhängigkeit von der Historie der Indikatoren ein Schwellenwert für eine abrupte Änderung festgelegt wird,
   - nach einer Betriebsphase der Vorrichtung ein Signal von mindestens einem Überwachungsindikator der Vorrichtung (4) aus Messungen von mindestens einem Sensor der Vorrichtung (4) berechnet wird,
   - die Signale der Indikatoren zu der Historie der Indikatoren hinzugefügt werden,
   - für jede Gruppe von Indikatoren mindestens eine eventuelle abrupte Änderung und ein Datum der eventuellen abrupten Änderung gesucht werden,
   - jede eventuelle abrupte Änderung mit dem Schwellenwert für die abrupte Änderung der Gruppe von Indikatoren verglichen wird, wobei die abrupte Änderung bestätigt wird, wenn eine Amplitude der eventuellen abrupten Änderung größer ist als der Schwellenwert für die abrupte Änderung,
   - festgelegt wird, dass ein plötzliches Ereignis nach einer logischen Regel anhand mindestens einer bestätigten abrupten Änderung mindestens einer Gruppe von Indikatoren deklariert wird,
   - dem plötzlichen Ereignis ein Datum des plötzlichen Ereignisses zugeordnet wird, das das jüngste Datum der bestätigten plötzlichen Änderungen ist, die es erlaubt haben, das plötzliche Ereignis festzulegen, und
   - in Abhängigkeit vom Datum des plötzlichen Ereignisses reagiert wird.

2. Verfahren nach Anspruch 1,
   **dadurch gekennzeichnet, dass**, um jedes Signal eines Überwachungsindikators der Vorrichtung (4) zu berechnen, zuerst mindestens eine an der Vorrichtung (4) durchgeführte Messung erfasst wird und dann ein Signal des Indikators als eine Funktion der Messungen berechnet wird.

3. Verfahren nach einem der Ansprüche 1 bis 2,
   **dadurch gekennzeichnet, dass** eine eventuelle abrupte Änderung ausgehend von einem einzigen Indikator gesucht wird.

4. Verfahren nach einem der Ansprüche 1 bis 2,
   **dadurch gekennzeichnet, dass** eine eventuelle abrupte Änderung ausgehend von mindestens zwei Indikatoren gesucht wird

5. Verfahren nach einem der Ansprüche 1 bis 4,
   **dadurch gekennzeichnet, dass** ein plötzliches Ereignis deklariert wird, wenn die bestätigte abrupte Änderung in mindestens einer Gruppe von Indikatoren erfasst wird.

6. Verfahren nach einem der Ansprüche 1 bis 4,
   **dadurch gekennzeichnet, dass** ein plötzliches Ereignis deklariert wird, wenn die bestätigte abrupte Änderung in jeder Gruppe von Indikatoren erfasst wird.

7. Verfahren nach einem der Ansprüche 1 bis 6,
   **dadurch gekennzeichnet, dass** der Schwellenwert für die abrupte Änderung für jede Gruppe von Indikatoren basierend auf der Historie der Indikatoren und dem Datum der bestätigten abrupten Änderung bestimmt wird.

8. Verfahren nach einem der Ansprüche 1 bis 7,
   **dadurch gekennzeichnet, dass** ein plötzliches Ereignis deklariert wird, wenn in einem vorgegebenen Zeitintervall mindestens eine bestätigte abrupte Änderung erfasst wird.

9. Verfahren nach einem der Ansprüche 1 bis 8,
   **dadurch gekennzeichnet, dass** die Vorrichtung (4) in einem Drehflügelflugzeug installiert ist, und dass die neuen Werte der Indikatoren während einer Betriebsphase des Flugzeugs zur Historie der Indikatoren hinzugefügt werden.

10. Verfahren nach einem der Ansprüche 1 bis 8,
    **dadurch gekennzeichnet, dass** die Vorrichtung (4) in einem Drehflügelflugzeug installiert ist, und dass die neuen Werte der Indikatoren nach einer Betriebsphase des Flugzeugs zur Historie der Indikatoren hinzugefügt werden.

11. Verfahren nach einem der Ansprüche 1 bis 10,
**dadurch gekennzeichnet, dass** die Vorrichtung (4) in einem Drehflügelflugzeug installiert ist, dass der Schwellenwert für die abrupte Änderung für jede Gruppe von Indikatoren bestimmt wird, und dann für jede Gruppe von Indikatoren nach einer Betriebsphase des Flugzeugs mindestens eine eventuelle abrupte Änderung und ein Datum der eventuellen abrupten Änderung gesucht werden.

12. Verfahren nach einem der Ansprüche 1 bis 9,
**dadurch gekennzeichnet, dass** die Vorrichtung (4) in einem Drehflügelflugzeug installiert ist, dass der Schwellenwert für die abrupte Änderung für jede Gruppe von Indikatoren bestimmt wird, und dann für jede Gruppe von Indikatoren während einer Betriebsphase des Flugzeugs mindestens eine eventuelle abrupte Änderung und ein Datum der eventuellen abrupten Änderung gesucht werden.

13. Verfahren nach einem der Ansprüche 1 bis 12,
**dadurch gekennzeichnet, dass** die Vorrichtung (4) in einem Drehflügelflugzeug installiert ist, und dass, wenn das Datum des plötzlichen Ereignisses zwischen zwei Betriebsphasen des Flugzeugs liegt, ein Neulernen der Schwellenwerte der Fehlererkennung der Indikatoren eingeleitet wird.

14. Verfahren nach Anspruch 13,
**dadurch gekennzeichnet, dass** das Neulernen der Schwellenwerte der Fehlererkennung nach dem Datum des plötzlichen Ereignisses und nach einer vorbestimmten Zeitverzögerung eingeleitet wird.

15. Verfahren nach einem der Ansprüche 13 bis 14,
**dadurch gekennzeichnet, dass** das Neulernen der Schwellenwerte der Fehlererkennung nach Bestätigung, dass eine menschliche Betätigung durchgeführt wurde, eingeleitet wird.

16. Verfahren nach einem der Ansprüche 1 bis 15,
**dadurch gekennzeichnet, dass** die Vorrichtung (4) in einem Drehflügelflugzeug installiert ist und dass, wenn das Datum des plötzlichen Ereignisses während einer Betriebsphase des Flugzeugs liegt, ein Alarm erzeugt wird, der eine Verschlechterung einer Vorrichtung (4) des Flugzeugs anzeigt.

17. Verfahren nach einem der Ansprüche 1 bis 16,
**dadurch gekennzeichnet, dass** jede Gruppe von Indikatoren durch ein parametrisches Modell als Funktion der Zeit über einen Zeitabschnitt modelliert wird, wobei das parametrische Modell ist:

$$S_t(x_1,...,x_k) = \begin{cases} f_{a_1,...,a_n,t}(x_1,...,x_i) \; si \; t \le t_{saut} \\ g_{b_1,...,b_m,t}(x_{i+1},...,x_k) \; si \; t > t_{saut} \end{cases},$$

wobei m und n ganze Zahlen sind,
wobei $a_1$ bis $a_n$ und $b_1$ bis $b_m$ Parameter des parametrischen Modells sind,
wobei $t_{saut}$ das Datum der möglichen abrupten Änderung ist, und wobei $x_i$ ein Abtastwert ist, der der möglichen abrupten Änderung vorausgeht, und $x_{i+1}$ ein Abtastwert ist, der unmittelbar nach der möglichen abrupten Änderung auftritt, und
dann eine Amplitude der möglichen abrupten Änderung $H_{saut}$ gemäß einer Formel $H_{saut} = H(a_1,...,a_n,b_1,....,b_m)$ definiert wird.

18. Mittel zum Erfassen und Berücksichtigen (5) einer abrupten Änderung mindestens eines Überwachungsindikators einer Vorrichtung (4), wobei die Vorrichtung (4) eine Mehrzahl von Messsensoren (101, 102, 103) umfasst, wobei die Berücksichtigungsmittel (5) umfassen:

- ein Zentralisierungsmittel (120), das mit mindestens einem zentralen Rechner (121) und mindestens einem ersten Speicher (122) versehen ist,
- ein System (110) zum Erfassen der Messungen der Messsensoren (101.102, 103), das mit mindestens einem Erfassungsrechner (111) und mindestens einem zweiten Speicher (112) ausgestattet ist, und
- mindestens ein Mittel zum Übertragen (130) zwischen dem Erfassungssystem (120) und dem Zentralisierungsmittel (130),

**dadurch gekennzeichnet, dass** das Mittel zum Erfassen und Berücksichtigen (5) angepasst ist, um das Verfahren nach einem der Ansprüche 1 bis 17 durchzuführen.

## Claims

1.  Method for detecting and recognising an abrupt change of at least one monitoring indicator of a device (4), the method implemented by a detection and recognition means, during which

    - the monitoring indicators of the device (4) are distributed in at least one group of indicators,
    - an abrupt change threshold is determined for each group of indicators based on an indicator log,
    - a signal of at least one monitoring indicator of the device (4) is calculated from the measurements of at least one sensor of the device (4) after an operating phase of the device,
    - the signals of the indicators are added to the indicator log,
    - at least one possible abrupt change and a date of the possible abrupt change is retrieved for each group of indicators,
    - each possible abrupt change is compared with the abrupt change threshold of the group of indictors, the abrupt change being confirmed when an amplitude of the possible abrupt change is greater than the abrupt change threshold,
    - it is determined whether an abrupt event is declared according to a logic rule from at least one confirmed abrupt change of at least one group of indicators,
    - a date of the abrupt event, which is the most recent date of the confirmed abrupt changes that made it possible to determine the abrupt event, is assigned to the abrupt event, and
    - action is taken based on the date of the abrupt event.

2.  Method according to claim 1,
    **characterised in that**, in order to calculate each signal of a monitoring indicator of the device (4), at least one measurement carried out on the device is first acquired, then a signal of the indicator is calculated based on the measurements.

3.  Method according to any of claims 1 to 2,
    **characterised in that** a possible abrupt change is retrieved from one single indicator.

4.  Method according to any of claims 1 to 2,
    **characterised in that** a possible abrupt change is retrieved from at least two indicators.

5.  Method according to any of claims 1 to 4,
    **characterised in that** an abrupt event is declared when the confirmed abrupt change is detected in at least one group of indicators.

6.  Method according to any of claims 1 to 4,
    **characterised in that** an abrupt event is declared when the confirmed abrupt change is detected in each group of indicators.

7.  Method according to any of claims 1 to 6,
    **characterised in that** the abrupt change threshold is determined for each group of indicators based on the indicator log and the date of the confirmed abrupt change.

8.  Method according to any of claims 1 to 7,
    **characterised in that** an abrupt event is declared when at least one confirmed abrupt change is detected over a predetermined time interval.

9.  Method according to any of claims 1 to 8,
    **characterised in that**, once the device (4) has been installed in a rotary wing aircraft, the new values of the indicators are added to the indicator log during an operating phase of the aircraft.

**10.** Method according to any of claims 1 to 8,
**characterised in that**, once the device (4) has been installed in a rotary wing aircraft, the new values of the indicators are added to the indicator log after an operating phase of the aircraft.

**11.** Method according to any of claims 1 to 10,
**characterised in that**, once the device (4) has been installed in a rotary wing aircraft, the abrupt change threshold for each group of indicators is determined, then at least one possible abrupt change and a date of the possible abrupt change is retrieved for each group of indicators after an operating phase of the aircraft.

**12.** Method according to any of claims 1 to 9,
**characterised in that**, once the device (4) has been installed in a rotary wing aircraft, the abrupt change threshold for each group of indicators is determined, then at least one possible abrupt change and a date of the possible abrupt change is retrieved for each group of indicators during an operating phase of the aircraft.

**13.** Method according to any of claims 1 to 12,
**characterised in that**, once the device (4) has been installed in a rotary wing aircraft, if the date of the abrupt event falls between two operating phases of the aircraft, a reassessment of the fault detection thresholds of the indicators is carried out.

**14.** Method according to claim 13,
**characterised in that** the reassessment of the fault detection thresholds is carried out after the date of the abrupt event and after a predetermined timeframe.

**15.** Method according to any of claims 13 to 14,
**characterised in that** the reassessment of the fault detection thresholds is carried out once it has been confirmed that a human operation has been performed.

**16.** Method according to any of claims 1 to 15,
**characterised in that**, once the device (4) has been installed in a rotary wing aircraft, if the date of the abrupt event falls during an operating phase of the aircraft, an alarm is generated indicating a degradation of a device (4) of the aircraft.

**17.** Method according to any of claims 1 to 16,
**characterised in that** each group of indicators is modelled by a parametric model as a function of time over a temporal portion, the parametric model being:

$$S_1(x_1, \dots, x_k) = \int_{a_1,\dots a_n,t} (x_1, \dots, x_i)\, si\ t \leq t_{saut}$$
$$g_{b_1,\dots b_m,t}(x_{i+1}, \dots, x_k)\, si\ t > t_{saut}$$

where m and n are integers,

where $a_1$ to $a_n$ and $b_1$ to $b_m$ are parameters of the parametric model,
where $t_{saut}$ is the date of the possible abrupt change, and
where $x_i$ is a sample preceding the possible abrupt change and $x_{i+1}$ is a sample appearing just after the possible abrupt change, and
then an amplitude of the possible abrupt change $H_{saut}$ according to a formula $H_{saut} = H(a_l,\dots,a_n, b_l,\dots,b_m)$ is defined.

**18.** Means for detecting and recognising (5) an abrupt change of at least one monitoring indicator of a device (4), the device (4) comprising a plurality of measuring sensors (101, 102, 103), the means for recognising (5) the abrupt change comprising:

- a centralisation means (120) provided with at least one central processor (121) and at least one first memory (122),
- a system for acquiring (110) the measurements of the measuring sensors (101, 102, 103) provided with at least one acquisition unit (111) and at least one second memory (112), and
- at least one means for transferring (130) between the acquisition system (120) and the centralisation means (130),

**characterised in that** the detection and recognition means (5) is suitable for implementing the method according to one of any of claims 1 to 17.

# Fig.1

# Fig.3

# Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0407179 A
- US 20090281735 A
- US 20110173496 A
- US 20050096873 A
- FR 2900745
- FR 2900746

**Littérature non-brevet citée dans la description**

- **BRIAN D. LARDER.** Helicopter HUM/FDR benefits and developments. *American Helicopter Society 55th Annual Forum,* 1999
- **PAUL GRABILL et al.** Vibration monitoring techniques investigated for the monitoring of a ch-47d swashplate bearing. *American Helicopter Society 59th Annual Forum,* 2003
- **PAUL SAMUEL et al.** Helicopter transmission diagnostics using constrained adaptive lifting. *American Helicopter Society 59th Annual Forum,* 2003